# EUROPÄISCHE PATENTANMELDUNG

(11) **EP 0 727 860 A1**
(43) Veröffentlichungstag der Anmeldung: **21.08.1996**
(21) Anmeldenummer: 96102460.1
(22) Anmeldetag: 19.02.1996
(51) Int. Cl.: H02J 13/00, G05B 19/042

(54) **Steuerungssystem zur Ansteuerung von Einrichtungen im Haushaltsbereich**

(30) Priorität: 20.02.1995 DE 19505677
(71) Anmelder: Bosch-Siemens Hausgeräte GmbH, D-81669 München (DE)
(72) Erfinder: Lüdtke, Franz-Rüdiger, Dipl.-Ing.,, 13507 Berlin (DE); Meyer, Hans-Holger, Dipl.-Ing., 12689 Berlin (DE); Striek, Ralf-Jürgen, Dipl.-Ing., 123629 Berlin (DE); Witt, Wolf-Dieter, Dipl.-Ing., 10119 Berlin (DE)

(57) **Zusammenfassung**

Das Steuerungssystem für Einrichtungen im Haushalt weist eine zentrale Steuereinheit auf, mit welcher eine Mehrzahl von anzusteuernden Einheiten, insbesondere Haushaltsgeräte, ansteuertechnisch in Verbindung stehen; erfindungsgemäß enthalten die an die zentrale Steuereinheit angeschlossenen und von dieser ansteuertechnisch zu beaufschlagenden Einheiten Sensoren zur Erfassung von Funktionsverhalten und von Funktionsteileverhalten, wobei die von den Sensoren erfaßten Werte über die Kommunikationsverbindung der zentralen Steuereinheit zur Anzeige und/oder weiteren Veranlassung, Auswertung und Abspeicherung zur Verfügung gestellt werden.

## Beschreibung

Die vorliegende Erfindung bezieht sich auf ein Steuerungssystem zur Ansteuerung von Einrichtungen im Haushaltsbereich, insbesondere zur Ansteuerung von Haushaltsgeräten, bei welchen einer Mehrzahl von anzusteuernden Einheiten eine zentrale Steuereinheit zugeordnet ist, die über Datenwege mit den anzusteuernden Einheiten in Kommunikationsverbindung stehen.

Es sind bereits Haushaltsgeräte mit eingebauter Steuerung bekannt, die alle autonom als eigenständige Einheiten funktionieren. Üblicherweise sind diese Steuereinrichtungen für Haushaltsgeräte, wie Geschirrspülauatomaten, Waschmaschinen und Elektroherde so ausgebildet, daß sie mit einem spezifischen, ihre Funktionsabläufe steuernden Mikroprozessor oder einer elektrischen Steuereinheit versehen sind. Hierbei kann die elektronische Steuervorrichtung aus einem Mikroprozessor bestehen, der anstehende Signalgrößen über Analog-Digitalwandler erfaßt und aus diesen Signalgrößen Steuersignale ableitet, die für den Funktionsablauf des jeweiligen Haushaltsgeräts wesentlich sind. All diesen Steuereinrichtungen für Haushaltsgerate ist gemeinsam, daß sie für jedes Gerät spezifisch angepaßt werden müssen, und daß jedes Haushaltsgerät somit ein solches Steuerteil benötigt. Es ist jedoch nicht möglich, die Funktionen verschiedener derartig ausgestatteter Haushaltsgeräte von einer Bedienungseinheit aus zu bedienen und zu steuern, bzw. verschiedene Funktionen dieser Haushaltsgeräte untereinander zu verknüpfen. Auch ist es nicht möglich, die hierbei eingesetzten Haushaltsgeräte fernzubedienen oder fernzuüberwachen.

Von diesem Stand der Technik geht bereits ein Entwicklungsvorschlag aus, welcher einen Küchenblock mit elektronischer Steuereinrichtung beschreibt (DE-OS 31 20 723). Dieser Küchenblock zeichnet sich aus durch eine Halterung mit rasterartig angeordneten Halteelementen, Energieversorgungselementen und Steuerungselementen, an der rasterartig eine Mehrzahl von Küchenmodulen lösbar befestigbar sind, die mit der Befestigung an der Halteeinrichtung mit einer elektronischen Steuereinrichtung und Energieversorgungseinrichtung in Wirkverbindung bringbar sind. In diesem Zusammenhang ist auch vorgeschlagen worden, daß die elektronische Steuereinrichtung als mit den Energieversorgungselementen verbundene Kommunikations- und Steuereinheit ausgebildet ist, die einen Mikroprozessor mit Speicheranordnung aufweist, der mittels eines Bedienfeldes programmierbar ist, über ein optoelektronisches Kommunikations-Interface mit einem Lichtleiter-Datenbus verbunden, der mit den Küchengeräte-Modulen in Wirkverbindung steht und über ein weiteres optoelektronisches Kommunikations-Interface mit einem Lichtleiter-Datenbus verbunden ist, an den mindestens eine Kommunikationseinheit angeschlossen ist.

Diese bekannte Anordnung verweist auch auf den Vorteil, daß das zum Einsatz gebrachte lichtelektronische Steuersystem gleichzeitig in ein Haus-Kommunikationssystem einbezogen werden kann, so daß eine Fernbedienung und Fernüberwachung von jedem Ort im Hause über die Funktionsabläufe innerhalb der Küche möglich sind. So sind alle beispielsweise in der Küche für die Haushaltsgeräte vorzunehmenden Bedienungsvorgänge auf einem Zentral-Bediengerät zusammengefaßt und auf einem Zentral-Monitor zur Überwachung dargestellt, wobei auch der Zentral-Monitor mit einem Rundfunk/Stereo-Steuerteil verbunden sein kann, so daß gleichzeitig sowohl der Zentral-Monitor als auch das Zentral-Steuerteil als Radiogerät zur Information der Hausfrau innerhalb der Küche eingesetzt werden kann.

Die Aufgabe der vorliegenden Erfindung besteht darin, für die Bedienung und Ansteuerung der einzelnen angeschlossenen Einheiten durch die zentrale Steuereinheit möglichst sachgerechte und zielführende Erleichterungen zu bieten.

Ein Steuersystem, das diesen Anforderungen gerecht wird, ist erfindungsgemäß dadurch gekennzeichnet, daß die an die zentrale Steuereinheit angeschlossenen und von dieser ansteuertechnisch zu beaufschlagenden Einheiten Sensoren zur Erfassung von Funktionsverhalten und von Funktionsteileverhalten enthalten, und daß die von Sensoren erfaßten Werten über die Kommunikationsverbindung der zentralen Steuereinheit zur Anzeige, zur Auswertung, zur weiteren Veranlassung und/oder Abspeicherung bei auftretenden Veränderungen zeitlich unmittelbar zur Verfügung gestellt werden.

Ein nach diesen erfindungsgemäßen Merkmalen ausgestattetes Steuerungssystem, insbesondere für die Haushaltsgeräte, aber auch für andere Einheiten im Haushalt, ermöglicht es, daß Veränderungen bezüglich des Verhaltens einzelner Funktionsabläufe, aber auch einzelner Funktionsteile zum einen dazu führen, daß diese Veränderungen nicht nur an der Anzeigeeinheit des zentralen Steuersystems und an gegebenenfalls vorhandenen weiteren Anzeigeeinheiten des Systems angezeigt werden, sondern daß auch, abhängig von diesen Veränderungen, die zentrale Steuereinheit sich auf entsprechende Folgeabläufe einstellt, diese anzeigt und dem Benutzer bzw. Anwender auf entsprechende Reaktionsmöglichkeiten oder Aktionsmöglichkeiten vorbereitet und hinweist. Wird beispielsweise ein Fernseher eingeschaltet, so greift die zentrale Steuereinheit auf das aktuelle Fernsehprogrammangebot zurück, das nach individuellen Auswahlkriterien abrufbar ist oder es bietet eine Auswahl gespeicherter individueller Angebote bei entsprechender, einzugebender Identifizierung der Personen. Wird andererseits ein Backofen geöffnet, so bietet das zentrale Steuersystem über seinen Sichtschirm die verschiedenen Nutzungs- und Einstellungsmöglichkeiten für dieses Gerät an; das Schließen der Backofentür kann als Startsignal für das Abarbeiten der eingestellten Funktionsabläufe ausgewertet werden.

Beispielsweise im Zusammenhang mit einem Kühlschrank oder Gefrierschrank wird als gefahrenträchtige Situation solange zu interpretieren sein, bis diese Situation durch Überlagerung, beispielsweise der Funktion "Abtauen" überlagert wird. Ansonsten ist diese Situation als ein Fehlverhalten zu interpretieren und wird entsprechend angezeigt.

Durch Speicherung von über Sensoren erfaßte Anomalitäten in den Funktionsabläufen von gespeicherten Soll-Größen generiert eine Vergleichs- und Auswerteschaltung zum einen ein Anforderungssignal für einen Kunden- oder Reparaturdienst und weist zum anderen bei Abruf diesen direkt auf das Fehlerverhalten hin.

Nach einer bevorzugten Ausgestaltung ist dieses erfindungsgemäße Steuerssystem dadurch gekennzeichnet, daß die zentrale Steuereinheit mit einer durch eine durch die Sensoren signalsierte Änderung von Zuständen des Funktionsverhaltens und/oder des Funktionsteileverhaltens aktivierbaren Stromversorgungs-Eingangsschaltung ausgestattet ist. Es ist im Rahmen dieser Ausgestaltung des erfindungsgemäßen Steuerungssystems also auch möglich, die zentrale Steuereinheit abzuschalten oder zumindest in den Stand-by-Zustand zu versetzen ohne daß diese tatsächlich im Bedarfsfall nicht zur Verfügung steht. Die zentrale Steuereinheit kann nämlich aus Energiespargründen dann abgeschaltet werden bzw. sich selbst abschalten, wenn von ihr über längere Zeit keine Steuerfunktionen erwartet werden.

## Patentansprüche

1. Steuerungssystem zur Ansteuerung von Einrichtungen im Haushaltsbereich, insbesondere zur Ansteuerung von Haushaltsgeräten, bei welchen einer Mehrzahl von anzusteuernden Einheiten eine zentrale Steuereinheit zugeordnet ist, die über Datenwege mit den anzusteuernden Einheiten in Kommunikationsverbindung stehen, **dadurch gekennzeichnet,** daß die an die zentrale Steuereinheit angeschlossenen und von dieser ansteuertechnisch zu beaufschlagenden Einheiten Sensoren zur Erfassung von Funktionsverhalten und von Funktionsteileverhalten enthalten, und daß die von Sensoren erfaßten Werten über die Kommunikationsverbindung der zentralen Steuereinheit zur Anzeige, zur Auswertung, zur weiteren Veranlassung und/oder Abspeicherung bei auftretenden Veränderungen zeitlich unmittelbar zur Verfügung gestellt werden.

2. Steuerungssystgem nach Anspruch 1, **dadurch gekennzeichnet,** daß die zentrale Steuereinheit mit einer durch eine durch die Sensoren signalsierte Änderung von Zuständen des Funktionsverhaltens und/oder des Funktionsteileverhaltens aktivierbaren Stromversorgungs-Eingangsschaltung ausgestattet ist.
